# EUROPEAN PATENT SPECIFICATION

(11) **EP 2 254 419 B1**
(45) Date of publication and mention of the grant of the patent: **17.08.2011**
(21) Application number: 09707460.3
(22) Date of filing: 06.02.2009
(51) Int. Cl.: A01N 57/12, A01N 25/28

(54) **STABILIZED MALATHION MICROCAPSULE FORMULATIONS**
STABILISIERTE MALATHION-MIKROKAPSELFORMULIERUNGEN
FORMULATIONS DE MICROCAPSULE DE MALATHION STABILISEES

(30) Priority: 06.02.2008 EP 08101318; 06.02.2008 US 6923 P
(43) Date of publication of application: 01.12.2010
(73) Proprietor: Cheminova A/S, 7620 Lemvig (DK)
(72) Inventor: PEDERSEN, Morten, 7620 Lemvig (DK); LAURSEN, Peter, C., 7500 Holstebro (DK)
(74) Representative: Rasmussen, Torben Ravn
(86) International application number: PCT/DK2009/050037
(87) International publication number: WO 2009/097860

(56) References cited:
- GB-A- 2 206 492

## Description

### Introduction

The present invention relates to microcapsule formulations comprising an aqueous suspension of a malathion solution encapsulated within a polymeric shell material and to the use of such formulations for the control of undesired insects and protection of crops against such insects.

### Background of the invention

Malathion is a well-known organophosphate insecticide often used in the form of solutions in organic solvent. The solutions are diluted with water immediately before spraying. For both environmental reasons and for reasons concerning the working environment there is a widespread desire to use, instead of solutions of pesticides in organic solvent, completely or partially water-based formulations, for instance oil-in-water emulsions or aqueous microcapsule suspensions. The chemical stability of organophosphate pesticides and their properties as to toxicity and smell are considerably impaired by the presence of water in formulations and in solid formulations such as wettable powders and water-soluble and water-dispersible granules. However, there is a marked tendency that the decomposition of the malathion into human and animal toxic isomers occurs considerably faster in both aqueous and solid formulations without proper stabilization than in formulations based on organic solvents. The formation of isomalathion in malathion formulations is an example of decomposition of an organophosphate pesticide to an isomer which is more toxic than the active compound from which the isomer is formed. The problem is therefore not only that e.g. isomalathion *per se* is the most toxic compound, but also that the isocompound to a considerable degree is known to potentiate the inherent toxicity of the active agent on human beings and animals. The consequence is that both the initial content and the formation of the isomeric compound as well as other toxic degradation by-products, such as malaoxon, in the formulations is to be limited as much as possible, and that the authorities only allow very limited concentrations of such toxic isomeric compounds in commercial pesticide formulations.

The use of microcapsules for both the slow or controlled and fast release of liquid, solid and solids dissolved or suspended in solvent is well known in the chemical art, including the agricultural industry. In agriculture, these release techniques have improved the efficiency of herbicides, insecticides, fungicides, bactericides and fertilizers. Microencapsulation reduces acute toxicity of pesticides, improves biological efficacy, may reduce leaching into groundwater, and can isolate incompatible pesticides from each other within the same formulation.

The material used in forming the shell of the microcapsule is typically taken from resin intermediates or monomers. The capsules tends to be porous in nature, and may release the entrapped material to the surrounding medium at a slow or controlled rate by diffusion through the shell wall. The capsules may be alternatively designed so as to quickly release the material to the surrounding medium by modifying the cross-linkage in the capsule wall. Further, the encapsulated material may be released in either a controlled or quick manner by means of a trigger mechanism built into the wall, wherein the trigger may be environmentally sensitive allowing quick breakdown of the microcapsule under certain conditions. In addition to providing controlled or quick release, the microcapsules also serve to facilitate the dispersion of water immiscible liquids into water and water containing media.

Several processes for encapsulating various materials have been previously developed. These processes can be divided into three broad categories - physical, phase separation and interfacial reaction methods. In the physical methods category, microcapsule shell material and core particles are physically brought together and the shell material flows around the core particle to form the microcapsule. In the phase separation category, microcapsules are formed by emulsifying or dispersing the core material in an immiscible continuous phase in which the shell material is dissolved and caused to physically separate from the continuous phase, such as by coacervation, and deposit around the core particles. In the interfacial reaction category, the core material is emulsified or dispersed in an immiscible continuous phase, and then an interfacial polymerization reaction is caused to take place at the surface of the core particles thereby forming microcapsules.

Interfacial polymerization reaction methods have often proven to be the most suitable processes for use in the agricultural industry for the microencapsulation of pesticides. There are various types of interfacial reaction techniques. In one type of interfacial condensation polymerization microencapsulation process, monomers from the oil and aqueous phases respectively are brought together at the oil/water interface where they react by condensation to form the microcapsule shell ("two phase polymerisation"). In general such reactions involve the condensation of an isocyanate moiety on one monomer with a second moiety such as an amine on a second monomer producing a polyurea capsule shell. Other capsule shell polymers are polyamide, polysulfonamide, polyester, polythioester, polycarbonate, polyurethane, polyphosphonamide, polyiminourea, polysiloxane or mixtures thereof. Two phase polymerisation capsules and their preparation are well known within the art and are e.g. described in United States patent no. US 3,577,515.

In a specific subclass of the interfacial condensation polymerization reaction, the *in situ* interfacial condensation polymerization reaction, all of the shell-forming monomers or prepolymers are contained in one phase (the oil phase or the aqueous phase as the case may be). In one process the oil is dispersed into a continuous or aqueous phase solution comprising water and a surface-active agent. The organic phase is dispersed as discrete droplets throughout the aqueous phase by means of emulsification, with an interface between the discrete organic phase droplets and the surrounding continuous aqueous phase solution being formed. *In situ* condensation of the shell-forming materials and curing of the polymers at the organic-aqueous phase interface may be initiated by heating the emulsion. The heating occurs for a sufficient period of time to allow substantial completion of *in situ* condensation of the monomers or prepolymers to convert the organic droplets to capsules consisting of solid permeable polymer shells enclosing the organic core materials.

Many such *in situ* condensations involve isocyanate moieties. For example one type of microcapsule prepared by *in situ* condensation and found in the art, as exemplified in United States Patent no. US 4,285,720 is a polyurea microcapsule which involves the use of at least one polyisocyanate and/or a diisocyanate as the shell-forming material. In the creation of polyurea microcapsules, the shell-forming reaction is initiated by heating the emulsion to an elevated temperature at which point the isocyanate groups are hydrolyzed at the interface to form amines, which in turn react with unhydrolyzed isocyanate groups to form the polyurea microcapsule shell wall.

A further type of microcapsule prepared by *in situ* condensation which does not involve the reaction of isocyanate groups is exemplified in United States patent no. US 4,956,129. These microcapsules, commonly referred to as "aminoplast" microcapsules, are prepared by the self-condensation of etherified urea-formaldehyde resins or prepolymers in which from about 50 to about 98% of the methylol groups have been etherified with a C4-C10 alcohol. This method may be varied as described International application no. WO 2001/019509, e.g. as to include disulfide links in the aminoplast shell.

Microencapsulation of malathion and an organic solvent, e.g. xylene, in polyurea capsules prepared according to the interfacial condensation polymerization reaction between isocyanates and amines, has previously been suggested by Drâgan et al in e.g. Romanian patent nos. RO 76732, RO 76748, RO 91754 and RO 92076. However, as seen in Revistade Chimie (Bucharest, Romania) (1987), 38(9), p. 826-9, encapsulation of malathion within a polyurea capsule shell comprising an aromatic solvent with a boiling point >100°C and where the pH value of the aqueous capsule suspension is kept between 7.5 to 8.0 does not to an adequate degree prevent degradation of malathion upon long term storage. Polyurea capsules comprising malathion and no organic solvent prepared according to the interfacial *in situ* condensation method is known from United States patent no. US 4,889,719.

Use of fatty acid methyl esters as solvent in malathion emulsifiable concentrate formulations is known from ASTM Special Technical Publication (1998), STP 1347 (Pesticide Formulations and Application Systems: 18th Volume), p. 185-194.

It has now been found that malathion encapsulated within a polymeric shell material can be stabilized from degradation by incorporating one or more solvents selected among esters of fatty acids within the polymeric shell.

### Description of the invention

One aspect of the present invention is to provide formulations comprising an aqueous suspension of a malathion solution encapsulated within a polymeric shell material wherein the malathion solution comprises malathion and one or more organic solvents selected among esters of fatty acids.

It has been found that the pH value of aqueous suspensions of microcapsules comprising malathion and esters of fatty acids when set within a certain range has a positive influence on the stability of the malathion on long term storage. As such, another aspect of the present invention is to provide aqueous suspensions of the malathion solution encapsulated within a polymeric shell material wherein the malathion solution comprises one or more organic solvents selected among esters of fatty acids and where the aqueous suspension has a pH value set within certain limits as described herein.

Another aspect of the present invention is to provide a method of stabilizing malathion by encapsulating the malathion solution within a polymeric shell material to provide microcapsules, said malathion solution comprising malathion and one or more organic solvents selected among esters of fatty acids. Within this aspect, a method is provided for stabilizing malathion by encapsulating the malathion solution within a polymeric shell material to provide microcapsules, said malathion solution comprising malathion and one or more organic solvents selected among esters of fatty acids. The method entails suspending the microcapsules in an aqueous medium and optionally maintaining a pH value in the aqueous medium within certain limits as described herein.

In another aspect of the invention there is provided a process for the preparation of malathion microcapsules suspended in an aqueous medium.

Yet another aspect of the invention relates to a method for the control of insects including protection of crops against such insects, said method comprise applying the microcapsule formulations as described above to the insects or to plants, plant seeds, soil, surfaces and the like infested with insects or likely to be occupied by insects.

It has further been found that by incorporating malathion within a formulation as described above phytotoxic damage on crops susceptible to malathion is reduced or eliminated when the malathion is applied in an insecticidal effective amount. Thus, in an aspect of the present invention a method is provided for the control of insects on crops, the said crops being susceptible to malathion, comprising applying to the crops a formulation comprising malathion solution encapsulated within a polymeric shell material to provide microcapsules, said malathion solution comprising malathion and one or more organic solvents selected among esters of fatty acids, whereby phytotoxic damage on the crops caused by the malathion is reduced or eliminated when applied in an insecticidal effective amount.

For the purpose of stabilizing the malathion, the microcapsules may be composed of polymeric shell materials of synthetic and/or natural origin. Examples of suitable materials include polyureas, polyurethanes, polyamides, polyester, melamine resins, gelatine, wax, and polysaccharides and their derivatives such as starch or cellulose.

The size of the microcapsules suitably prepared are of the nano or micro size (collectively referred to within the art as microcapsules) and are preferably of an average size between 0.1 to 100 microns in diameter, preferably 1-40 microns, more preferably between 1 and 20 microns and even more preferably between 1 and 10 microns and most preferably between 2 and 7 microns in diameter.

Although any technique may be used to prepare the microcapsules according to the invention, those prepared using the interfacial condensation polymerization reaction (including the *in situ* condensation method) are preferred as they often provide the ability to obtain a high loading of the malathion within the capsule shell. The polymer shell materials of this invention may be any polymer system conventionally used in microcapsule shell-formation or suitable for such use. Examples include shell materials made by isocyanate polymerisation reactions forming for example polyurea and polyurethane resins, non-isocyanate systems such as polyester, polythioester, polyamide polysulfonamide, polyphosphonamide, polycarbonate, polysiloxane polymers and the self-condensation of an optionally etherified urea-formaldehyde prepolymer. Included in this list of possible options are mixtures of polymer types e.g. that capsule shell may be composed of such shell material as polyester-polyamide and polyamide-polyurea. Within the scope of the present invention is also the use of certain shell modifying compounds, i.e. compounds that when incorporated into the shell forming material affect the properties of the capsule e.g. imparts surface activity or release characteristics of the malathion from the capsule.

Preferred are microcapsules having a shell material comprising polyurea, polyurethane, polyamide and polyester with polyurea capsules being most preferred. Whilst the isocyanate-based process is generally applicable to a wide range of isocyanate shell-forming reactions such as those described above, the *in situ* polyurea process and the polyurea two phase polymerisation process are generally most convenient, e.g. condensation polymerization reaction between isocyanates and amines.

Examples of suitable diamine and polyamine reactants are ethylene diamine, phenylene diamine, toluene diamine, hexamethylene diamine, diethylene triamine, piperazine, 1,3,5-benzenetriamine trihydrochloride, 2,4,6-triaminotoluene trihydrochloride, tetraethylene pentamine, pentaethylene hexamine, polyethylene imine, 1,3,6-triaminonaphthlene, 3,4,5-triamino-1,2,4-triazole, melamine, and 1,4,5,8-tetraminoanthraquinone. Examples of difunctional and polyfunctional acid derived compounds providing -COCl reactive groups are sebacoyl chloride, ethylene-bis-chloroformate, phosgene, azelaoyl chloride, adipoyl chloride, terephthaloyl chloride, dodecanedioic acid chloride, dimer acid chloride, 1,2,4,5-benzene tetraacid chloride, trimer acid chloride, citric acid chloride and 1,3,5-benzene trischloroformate. Examples of suitable diols for use as monomers are hydroquinone, resorcinol, catechol, and various glycols such as ethylene glycol, pentanediol, hexanediol, dodecanediol, 1,4-butanediol and the like. Polyfunctional alcohols of this character, e.g., triols and polyols, are exemplified by pyrogallol (1,2,3-benzenetriol), phloroglucinol dihydrate, pentaerythritol, trimethylolpropane, tetrahydroxyquinone 1,4,9,10-tetrahydroxyanthracene, diresorcinol and 3,4-dihydroxyanthranol. Intermediates useful in providing reactive isocyanate groups are represented by such compounds as paraphenylene diisocyanate, meta-phenylene diisocyanate, naphthalene-1,5-diisocyanate, tetrachloro-m-phenylene diisocyanate, toluene diisocyanate (TDI) (various isomers), 4,4-diphenyl diisocyanate, the dichloro diphenyl methane diisocyanates, bibenzyl diisocyanate, bitolylene diisocyanate, the diphenyl ether diisocyanates, the dimethyldiphenyl diisocyanates, polymethylene polyphenyl isocyanate (PAPI), triphenylmethane-4,4',4"-triisocyanate, isopropylbenzene .alpha.-diisocyanate and the like. The use of isocyanates in which the-NCO group is 'masked' is well known in isocyanate polymer chemistry. For example, the-NCO group may be reacted with various molecules (BH) to give blocked isocyanates (RNHCOB). The blocked isocyanates may be de-blocked by further reaction with nucleophiles:

RNCO + BH -> R-NH-CO-B

R-NH-CO-B + NuH -> R-NH-CO-Nu + BH

While the use of blocked isocyanates falls within the scope of the present invention, such approach is not preferred as it normally requires relatively high (>100°C) temperatures for the deblocking reaction, and as the blocking agents are released into the medium.

Concentrated aqueous microcapsules suspensions manufactured according to the interfacial condensation polymerization reaction method may be prepared according to the following standard procedure:
(a) preparing an organic solution, i.e. an oil phase (hydrophobic solution), comprising the malathion to be encapsulated, at least one shell-forming material, one or more organic solvents selected among esters of fatty acids and, optionally, additional water immiscible auxiliaries;
(b) creating an emulsion of the organic solution in a continuous aqueous phase solution comprising water and, optionally, additional water miscible auxiliaries, wherein the emulsion comprises discrete droplets of the organic solution dispersed throughout the continuous aqueous phase solution, with an interface formed between the discrete droplets of organic solution and the aqueous solution; and either
   i. causing *in situ* polymerization and/or curing of the shell-forming material in the organic solution of the discrete droplets at the interface with the aqueous solution by heating the emulsion for a sufficient period of time and optionally adjusting the pH to a suitable value to allow substantial completion of shell formation, thereby converting the organic solution droplets to capsules consisting of solid, permeable, polymer shells enclosing a malathion solution, or as an alternative to (i)
   ii. causing polymerization at the oil-water interface by bringing together a shell forming material added through the aqueous continuous phase and capable of reacting with the shell forming material(s) in the organic solution, and
(c) optionally adjusting the pH value of the formed aqueous suspension

It should be noted that the water miscible auxiliaries that do not have any influence on the formation of the microcapsule shell wall may be added after the encapsulation has taken place, i.e. after the above steps (b) or (c) as long as the pH of the final aqueous microcapsule suspension is within the desired range.

The following are specific instances of polymerization reactions to which the above encapsulation procedure is applicable. Diamines or polyamines in the aqueous phase react with diacid or polyacid chlorides in the oil phase to yield capsule shells consisting of polyamides. Di- or poly-isocyanates molecules in the oil phase react with di- or poly-ols in the aqueous phase to form polyurethane. Diamines or polyamines in the aqueous liquid condense with dichloroformates or polychloroformates in the oil phase to form a polyurethane capsule skin. Diamines or polyamines in the aqueous liquid react with disulfonyl or polysulfonyl chlorides in the organic liquid to produce a polysulfonamide capsule skin. With diols or polyols in the aqueous liquid and diacid or polyacid chlorides in the oil phase liquid, polyester capsule shells are produced. When bischloroformates or polychloroformates are used in the organic liquid, the capsule skins are polycarbonates. Not only are there other complementary intermediates which react to form polycondensates in a manner useful in the interfacial polycondensation process of encapsulation, but various mixtures of intermediates, i.e., mixtures of capsule shell forming components, may be employed in either or both of the aqueous and organic phases. For example, mixtures of diols and diamines in the aqueous liquid and acid chloride(s) in the organic liquid are useful to achieve polyester-polyamide condensation copolymers. Also, diamines or polyamines in the aqueous liquid and mixtures of diacid or polyacid chlorides and diisocyanates or polyisocyanates in the organic liquid produce a polyamide-polyurea shell.

The esters of fatty acids are preferably esters of plant oils. The esters are preferably alkyl esters, for example obtainable from medium chained fatty acids by esterification with alkanols, and include (C1-C20)-alkyl (C5-C22)-fatty acid esters. Preferred fatty acids of these plant oils have a carbon chain length of 5 to 20, in particular 6 to 18 carbon atoms. In a preferred embodiment the alkyl part of the fatty acid esters consist of 1-18 carbon atoms (straight or branched). Preferably (C1-C6)-alkyl esters are used (e.g. methyl, ethyl, propyl, iso-propyl, butyl, iso-butyl, sec-butyl, pentyl and hexyl), more preferably the alkyl part consist of 1-3 carbon atoms, even more preferably 1-2 carbon atoms, and most preferably methyl esters of plant oils are used, and even more preferably methylated plant oils wherein the fatty acid has a carbon chain length between 7-16, more preferably 8-14. Examples of esters of fatty acids are Stepan C-25 methyl ester, Stepan C-40 methyl ester, Stepan 653 or Stepan IPM all available from Stepan, or Witconol 2301, Witconol 2307, Witconol 2308, Witconol 2309 all available from Witco Corporation, or ethyl caproate available from SigmaAldrich, or Edenor ME C6-C10, Edenor ME C12 98/100 both available from Cognis or Tegosoft MM and Tegosoft SH both available from Goldschmidt, as well as the Agnique ME series of products available from Cognis such as Agnique ME 890-G and Agnique ME 12CF. It is advantageous to choose esters of fatty acids with low viscosity to ease formation of a homogeneous phase. Fatty acids are usually obtained from a natural source and are therefore mixtures of acids with various chain lengths. As used herein, the carbon number of a particular fatty acid refers to the number of carbon atoms of the main acid component, i.e. the component prevailing in the highest amount. Thus, apart from an ester of a fatty acid having a specified carbon number, minor amounts of esters of fatty acids having a smaller or higher amount of carbon atoms in the acid part may occur. As an example methyl coconate usually comprises about 45-55% of the main C12 methyl ester, the rest being methyl esters of acids having 6, 8, 10, 14, 16 or 18 carbon atoms in various but individually less amounts than the acid having 12 carbon atoms.

The amount of organic solvent used in preparing the microcapsules may be balanced so as to obtain a ratio, by weight, of solvent to malathion in the range of 20:1 to 1: 20, preferably 2:1 to 1:15, more preferably 1:1 to 1:10 and most preferably 1:1 to 1:5. In particular use of the solvent(s) in an amount less than the amount of malathion has surprisingly proven to contribute in a positive manner to the stability of the malathion.

The concentration of the malathion initially present in the hydrophobic solution should be sufficient to provide at least about 1 gram of malathion per liter of total aqueous microcapsule suspension. In general, the concentration ranges from 10 to 700 grams of malathion per liter of total aqueous microcapsule suspension, preferably between 100-600, more preferably between 200-550 and even more preferably between 250-500 grams pr. liter. While highly concentrated formulations are more preferred as commercially available goods, the end consumer uses, as a rule, dilute compositions. Such compositions are part of the present invention.

In the preparation, the aqueous phase may also contain, as an optional auxiliary, one or more surfactants, e.g. to stabilize the aqueous suspension. Surfactants are, for example, non-aromatic-based surfactants, based for example on heterocycles, olefins, aliphatics or cycloaliphatics, examples being surface-active, mono-or poly-alkyl-substituted and subsequently derivatized, e.g., alkoxylated, sulfated, sulfonated or phosphated, pyridine, pyrimidine, triazine, pyrrole, pyrrolidine, furan, thiophene, benzoxazole, benzothiazole, and triazole compounds, and/or aromatic-based surfactants, examples being mono-, or poly-alkyl-substituted and subsequently derivatized, e.g., alkoxylated, sulfated, sulfonated or phosphated benzenes or phenols.

Examples of surfactants are listed below, wherein EO = ethylene oxide units, PO = propylene oxide units, and BO=butylene oxide units, and where the surfactants from group s1-s18 are non-aromatic based whereas the s19-s21 surfactants are aromatic based:
s1 ) C10-C24 alcohols, which may be alkoxylated, with for example 1-60 alkylene oxide units, preferably 1-60 EO and/or 1-30 PO and/or 1-15 BO in any order. The terminal hydroxyl groups of these compounds may be endgroup-capped by an alkyl, cycloalkyl or acyl radical having 1-24 carbon atoms.
s2) Anionic derivatives of the products described under s1), in the form of ether carboxylates, sulfonates, sulfates, and phosphates, and their inorganic (e.g., alkali metal and alkaline earth metal) and organic salts (e.g., based on amine or alkanolamine). Copolymers composed of EO, PO and/or BO units such as, for example, block copolymers having a molecular weight of 400 to 10⁸. Alkylene oxide adducts of C1-C9 alcohols
s3) Fatty acid alkoxylates and triglyceride alkoxylates or alkoxylated vegetable oils such as soybean oil, rapeseed oil, corn germ oil, sunflower oil, cotton seed oil, linseed oil, coconut oil, palm oil, thistle oil, walnut oil, peanut oil, olive oil or castor oil, especially rapeseed oil, salts of aliphatic, cycloaliphatic, and olefinic carboxylic acids and polycarboxylic acids.
s4) Fatty acid amide alkoxylates; alkylene oxide adducts of alkynediols; sugar derivatives such as amino sugars and amido sugars, glucitols alkylpolyglycosides or such as sorbitan esters cyclodextrin esters or ethers
s5) Surface-active cellulose derivatives and algin derivatives, pectin derivatives and guar derivatives; polyol-based alkylene oxide adducts. Surface-active polyglycerides and their derivatives.
s6) Alkanesulfonates, paraffin sulfonates, and olefin sulfonates; sulfosuccinate-based surfactants, such as dialkylsuccinates.
s7) Alkylene oxide adducts of fatty amines, quaternary ammonium compounds having 8 to 22 carbon atoms
s8) Surface-active zwitterionic compounds such as taurides, betaines, and sulfobetaines
s9) Silicone-based and/or silane-based surface-active compounds.
s10) Perfluorinated or polyfluorinated surface-active compounds.
s11) Surface-active sulfonamides such as those from Bayer.
s12) Surface-active polyacrylic and polymethacrylic derivatives s13) Surface-active polyamides such as modified gelatins or derivatized polyaspartic acid.
s14) Polyvinyl surfactant-type compounds such as modified polyvinylpyrrolidone or the derivatized polyvinyl acetates or the polyvinyl butyrates or modified polyvinyl alcohols.
s15) Surface-active compounds based on maleic anhydride and/or reaction products of maleic anhydride, and also copolymers containing maleic anhydride and/or reaction products of maleic anhydride, such as the A
s16) Surface-active derivatives of montan waxes, polyethylene waxes, and polypropylene waxes.
s17) Surface-active phosphonates and phosphinates
s18) Polyhalogenated or perhalogenated surfactants.
s19) Phenols, which may have been alkoxylated, examples being phenyl C1-C4 alkyl ethers or (poly)alkoxylated phenols [i.e., phenol (poly)alkylene glycol ethers], having for example 1 to 50 alkyleneoxy units in the (poly)alkyleneoxy moiety, the alkylene moiety having preferably 1 to 4 carbon atoms in each case, preferably phenol reacted with 3 to 10 mol of alkylene oxide, (poly)alkylphenols or (poly)alkylphenol alkoxylates [i.e., polyalkylphenol (poly)alkylene glycol ethers], having for example 1 to 12 C atoms per alkyl radical and 1 to 150 alkyleneoxy units in the polyalkyleneoxy moiety, preferably triisobutylphenol or tri-n-butylphenol reacted with 1 to 50 mol of ethylene oxide, polyarylphenols or polyarylphenol alkoxylates [i.e., polyarylphenol (poly)alkylene glycol ethers], examples being tristyrylphenol polyalkylene glycol ethers having 1 to 50 alkyleneoxy units in the polyalkyleneoxy moiety, preferably tristyrylphenol reacted with 1 to 50 mol of ethylene oxide.
s20) Compounds which, formally, constitute the reaction products of the molecules described in s19) with sulfuric acid or phosphoric acid, and their salts neutralized with suitable bases, by way of example the acidic phosphoric ester of triply ethoxylated phenol, the acidic phosphoric ester of a nonylphenol reacted with 9 mol of ethylene oxide, and the triethanolamine-neutralized phosphoric ester of the reaction product of 20 mol of ethylene oxide and 1 mol of tristyrylphenol.
s21) Benzenesulfonates such as alkyl- or arylbenzenesulfonates, examples being (poly)alkylbenzenesulfonates and (poly)arylbenzenesulfonates, both acidic and neutralized with suitable bases, having for example 1 to 12 carbon atoms per alkyl radical and/or having up to 3 styrene units in the polyaryl radical, preferably (linear) dodecylbenzenesulfonic acid and its oil-soluble salts such as the calcium salt or the isopropylammonium salt of dodecylbenzenesulfonic acid.

Such surface active compounds are generally known and readily available on a commercial scale.

If a surfactant is added to the aqueous suspension of microcapsules such ingredients are preferably added at a concentration of from about 0.01% to about 30% by weight of the total suspension.

Further optionally auxiliaries which may be included in either the organic or aqueous phase (depending on solubility) include one or more additional organic solvents different from esters of fatty acids (i.e. co-solvents), thickeners, antifreeze agents, preservatives, protective colloids, antifoaming and defoamer agents, spreading agents, stickers, wetting agents, structuring agents, stabilisers, UV-protectants, dyes and one or more additional insecticides different from the malathion. Such auxiliaries are generally known within the art of agrochemical formulation chemistry, and although a specific ingredient is classified as falling within one category, it may well serve the purpose of any of the others as many surfactants are multifunctional.

The additional organic solvent includes those selected by example among alcohols, esters, ketones, ethers, hydrocarbons and aromatic hydrocarbons, as well as mixtures thereof. Preferred are aromatic hydrocarbons such as toluene, xylenes, mesitylene, diisopropylbenzene and its higher homologs, indane and naphthalene derivatives, such as 1-methylnaphthalene, 2-methylnaphthalene.

Examples of suitable antifreeze agents are monohydric or polyhydric alcohols, glycol ethers or urea, especially calcium chloride, glycerol, isopropanol, propylene glycol monomethyl ether, di- or tripropylene glycol monomethyl ether or cyclohexanol.

Stabilizers that may be included are peroxide compounds such as hydrogen peroxide and organic peroxides, alkyl nitrites such as ethyl nitrite and alkyl glyoxylates such as ethyl glyoxylate.

Thickeners may be organic or inorganic in nature; they may also be combined. Suitable examples include those based on aluminum silicate, on xanthan, on methylcellulose, on polysaccharide, on alkaline earth metal silicate, on gelatin, and on polyvinyl alcohol.

Adjustment of pH in the microcapsule surrounding aqueous phase is not necessarily required to stabilize the malathion and depends on the composition of the formulation, but practically the pH value of the aqueous suspension of microcapsules is preferably lower than 12 and as such no lower limit observed (although higher than 1 from a practical point of view is preferred), and is preferably lower than 10 (e.g., between 1-10) and even more preferably lower than 8 (e.g. between 1-8). In a preferred embodiment pH values between 2 and 7 are preferred, more preferably the pH value is between 2.5 and 7, even more preferably between 3 and 6.5 and most preferred between 3.5 and 6.5. As the pH value is relative to the concentration of malathion in the capsule suspension, these pH values apply to the aqueous formulations as described above, i.e. concentrates with a microencapsulated malathion concentration greater than 1 gram of malathion per liter of total aqueous microcapsule suspension.

One need not necessarily add pH adjusters if pH regulation is desired since the formulation system by itself including any optionally auxiliaries, may ensure that the pH-value of the final concentrated suspension of microcapsules is within the desired range even on long term storage. If appropriate, the amount of pH-adjusters is at ones option but is suitably present to ensure a pH-value of the suspension within the desired range. The pH-adjusters include both acids and bases of the organic or inorganic type. Preferred pH-adjusters include organic acids and alkali metal compounds. The organic acids include those such as citric, malic, adipic, cinnamic, fumaric, maleic, succinic, and tartaric acid, and the mono-, di-, or tribasic salts of these acids are suitable organic acid salts. Suitable salts of these acids are the soluble or meltable salts and include those salts in which one or more acidic protons are replaced with a cation such as sodium, potassium, calcium, magnesium, and ammonium. Alkali metal compounds include hydroxides of alkali metals such as sodium hydroxide and potassium hydroxide, carbonates of alkali metals such as sodium carbonate and potassium carbonate, hydrogencarbonates of alkali metals such as sodium hydrogencarbonate and alkali metal phosphates such as sodium phosphate. Mixtures may be used, e.g. to create a pH buffer system.

The agitation employed to establish the dispersion of water-immiscible droplets in the aqueous phase may be supplied by any means capable of providing suitably high shear. That is, any variable shear mixing apparatus, e.g., a blender, a homogenizer, etc. can be employed to provide the desired agitation and this step is carried out until the desired droplet size is obtained.

Methods of varying the permeability and thickness of the capsule wall are well known to those skilled in the art and include variation of the type and amount of shell-forming material(s) and the degree of cross-linking used, i.e. the amount of polyfunctional monomers vs. di-functional monomers. The present invention may be directed to microcapsule systems having a wall which presents either a significant or a more transient barrier to release of the core material. Thus for example microcapsules of the present invention will not generally release the core material until after application to the desired target or utility, although for some applications the microcapsule may be designed to be ruptured on or immediately after application. Alternatively the microcapsules of the present invention may be designed to release the core material slowly over a period of time. In general it is preferred that the weight ratio of the shell material(s) to the microcapsule (core plus shell) is greater than 1%. Typically the weight ratio will be from 1% to 60%, more specifically from 1% to 30% or even more specifically from 1 to 15%.

The microcapsules of the present invention require no additional treatment such as separation from the aqueous liquid, and the concentrated microcapsule suspension may be directly utilized. However, alternatively the aqueous suspension comprising the microcapsules may be brought into solid form by e.g. drying the suspension and granulating by using known methods to afford dry microencapsulated granular compositions which can either be used directly or re-dispersed into water, optionally comprising addition of pH regulators to ensure a pH value of the microcapsule suspension as described herein.

Use of the esters of fatty acids to a significant degree stabilize the malathion within the capsule and prevents degradation on long term storage, and this even without using further means to stabilize the final formulation. That is, the microcapsules comprising malathion and one or more esters of fatty acids by them self, and not necessarily using e.g. pH stabilization of the aqueous suspension, provides stabilization of the malathion upon long term storage. Thus, in a preferred embodiment there is provided microcapsules comprising, within the capsule shell, malathion and one or more solvents selected among ester of fatty acids, and in particular microcapsules comprising a capsule shell composed of polyurea, polyurethane, polyamide or polyester or mixtures thereof.

In more preferred embodiment pH stabilization of the capsule suspension within a certain range as described herein combined with the use of esters of fatty acids as solvents within the capsule shell is advantageously employed.

Capsule suspensions of the present invention may also be produced containing two materials that may be incompatible with each other, e.g. one being the malathion, with the malathion being encapsulated and the other contained in the aqueous phase of the suspension. Such combination products are storage stable and by example, enable the production of combination pesticidal products wherein pesticides incompatible with malathion may be applied together with the malathion.

Mixtures of capsules with various release characteristics of the malathion or any other insecticidal active ingredients within the same capsule may be employed, e.g. microcapsules with a fast release profile may be mixed with microcapsules having a long term release profile to provide overall formulations that exhibit a rapid effect (e.g. knockdown effect) towards the insects while still providing an adequate insect control over time.

The microcapsule formulations according to the invention are prepared in such a way as to preferably stabilize the malathion from degradation to an extend whereby less than about 5% of the malathion is degraded upon storage at 54°C for 14 days, preferably less than about 4%, more preferably less than about 3% and even more preferably less than about 2%. As isomalathion formation should be kept at a low level in malathion formulations, the microcapsule formulations according to the invention are prepared in such a way as to keep levels of isomalathion below the maximum concentration allowed by regulatory authorities. By example, a microcapsule composition comprising about 400 grams of malathion pr liter of formulation is advantageously prepared so as to keep the isomalathion concentration lower than about 5000 ppm upon storage at 54°C for 14 days, preferably lower than about 3000 ppm, more preferably lower than about 2000 ppm and even more preferably lower than about 1000 ppm.

The microcapsule formulations as described herein may be used for the control of undesirable insects including protection of crops against such insects, said use comprise e.g. applying the microcapsule formulations preferably in diluted form (e.g. aqueous diluted form), to the insects or to plants, plant seeds, soil, surfaces and the like infested with insects or likely to be occupied by insects. The microcapsules according to the invention are applicable for the control of quite a number of insects, primarily sucking and chewing insects, in areas grown with agricultural and plantation crops in particular, but may advantageously also be used in other places infected with undesired insects, e. g. areas where insects live or their eggs hatch outdoor as well as indoor. Use of the formulations as described herein comprises delivering to the target a microcapsule formulation in an insecticidal effective and adequate amount. An effective amount is an amount sufficient to provide adequate insect control, i.e. an amount that has the ability to combat the harmful insects sufficiently to cause a measurable reduction in the exposed insect population. An adequate amount cannot generally be defined, since it depends upon, e.g., the harmful insects to be controlled, method of application, the type or size of plant or seed to be protected, and climate condition at time of application. Suitably the malathion formulations are diluted for crop protection as to deliver an amount between 100-2000 grams pr. hectare, preferably 200-1600 g/ha, more preferably 400-1400 g/ha. and even more preferably between 600-1200 g/ha. However, by example, in mosquito control amounts as low as 40 g/ha may be appointed to provide adequate control.

Crops the formulations may be applied to include: rice, almonds, citrus, nectarines, cherries, apples, celery, grapes, broccoli, cereals, brussels sprouts, celery, lentils, mushroom, strawberries, onions, cabbage, cauliflower, cotton, persimmon, cucumbers, lettuce, cucurbits, melons, avocado, figs, peaches, pears, apricots, potatoes, beans, soybeans, beets, tomato, berries, mint, squash, eggplant, pepper, radish, spinach, sweet corn, grasses, clover, and ornamentals and forests; The undesirable insects include rice water weevil, green rice leafhopper, brown planthopper, white-backed planthopper, grass leaf roller, rice stem borer, smaller brown planthopper, mosquito, navel orangeworm, peach twig borer, apple aphid, cereal aphid, redbanded leafroller, obliquebanded leafroller, plum curculio, white apple leafhopper, spotted tentiform leafminer, tarnished plant bug, vegetable leafminer, cabbage looper, imported cabbageworm, granulate cutworm, black cutworm, fall armyworm, beet armyworm, diamondback moth, bollworm (corn earworm), tobacco budworm, pink bollworm, lygus bugs, cotton leaf perforator, boll weevil, cotton fleahopper, saltmarsh caterpillar, whitefly, cotton aphid, oriental fruit moth, green fruitworm, lesser peachtree borer, rose chafer, pear psylla, codling moth, green fruitworm, Colorado potato beetle, potato leafhopper, aster leafhopper, potato flea beetle, potato aphid, potato tuberworm, potato psyllid, green cloverworm, Mexican bean beetle, bean leaf beetle, soybean looper, velvetbean caterpillar, leafhoppers, cutworm complex, European corn borer, Southern armyworm, gypsy moth, western spruce budworm, eastern spruce budworm, tussock moth, tent caterpillar, fall webworm, canker worm, and pine sawfly. Within the scope of this invention such crops further comprise those that are resistant, either by transgenic means or selected by classical means, to pesticidal active ingredients and/or those that are resistant to certain pests, for example *Bacillus thuringiensis* (Bt) pest-resistant crops.

The formulations according to the invention show bioefficacy comparable to that of conventional EC formulations but at the same time avoids the use of large amounts of hazardous organic solvents and as such are more environmental and user friendly with an improved toxicological profile such as reduced eye and skin irritation. Besides being chemically stable for a prolonged period of time on storage, the formulations are easily degraded in soil upon application which is highly desirable from an environmental perspective. The formulations have for a crop protection purpose an excellent crop-safety profile, i.e. they can be applied without causing phytotoxic damage on crops. Low phytotoxicity is of importance and it is of special importance when spraying on susceptible crops (both the plant itself and in particular fruits thereof) such as for instance apples, table grapes, table olives, nectarines, cucumbers, melons, cherries, pepper, strawberries, persimmon and ornamentals. The phytotoxic effect is especially pronounced when applied to a plant under stress conditions such as drought. Thus, malathion may be used for the control of insects on crops susceptible to malathion by incorporating the malathion within a microcapsule formulation as described herein thereby reducing or eliminating the phytotoxicity of the malathion to the crop while maintaining a sufficient level of insecticidal activity.

For the purpose of this invention, all percentages expressed herein are percentage by weight, unless otherwise specified.

The invention is illustrated by the following examples:

### Example 1

Malathion polyurea microcapsule formulations were prepared. The compositions of the microcapsules prepared are outlined in table 1. Product 1 is applied as reference formulation in the present example.

**Table 1**

| Product no. | 1 (comparative) | 2 | 3 | 4 |
|---|---|---|---|---|
| Composition (% w/w) | | | | |
| Oil phase: | | | | |
| **Malathion** | 40 | 40 | 40 | 40 |
| **PAPI** (Shell material) | 2.4 | 2.4 | 2.4 | 2.4 |
| **TDI** (Shell material) | 2.4 | 2.4 | 2.4 | 2.4 |
| **Agnique ME 12CF** (Solvent) | 0 | 10 | 15 | 20 |
| Water phase: | 3.5 | 3.5 | 3.5 | 3.5 |
| **LFH** (Emulsifier) | 0.28 | 0.28 | 0.28 | 0.28 |
| **Sodium citrate** (Buffer) | 0.4 | 0.4 | 0.4 | 0.4 |
| **Hydrogen peroxide** (Stabilizer) | Adjust to pH 5.0 | Adjust to pH 5.0 | Adjust to pH 5.0 | Adjust to pH 5.0 |
| **Sodium hydroxide 1M** (pH modifier) | Up to 100 | Up to 100 | Up to 100 | Up to 100 |
| **Water** | | | | |
| % of initial malathion content degraded after 14 days at 54°C | 20.7 | 1.6 | 1.1 | 1.2 |
| Isomalathion (ppm) in fresh formulation | 740 | 325 | 335 | 288 |
| Isomalathion (ppm) after 14 days at 54°C | 14400 | 1476 | 1072 | 969 |

The malathion microcapsules listed in table 1 were prepared applying the interfacial condensation polymerization reaction and using a mix of two isocyanates, i.e. PAPI (polymethylene polyphenyl isocyanate) and TDI (toluene diisocyante).

The oil phase, malathion, PAPI, TDI and Agnique ME 12 CF (a methylated fatty acid), was mixed applying a low shear mixer. Similarly the water phase of the microcapsule formulations in table 1 was prepared by mixing the ingredients, LFH (anionic emulsifier available from Clariant), sodium citrate, sodium hydroxide 1 M and water. Afterwards, the oil phase was added to the water phase applying high shear mixing during addition and for ca. 10 min. after addition of the oil phase was finished. Electric conductivity measurement was used to assure the emulsion was of the o/w type. Average droplet size after emulsification was in the range 4-6 µm. The high shear stirrer was replaced by an anchor stirrer and the temperature was raised to 68°C in order to speed up the interfacial polymerization reaction. After 6 h the temperature was lowered to room temperature and the pH was measured. Adjustment to pH 5.0 was done using sodium hydroxide 1M.

According to the stability data in table 1, addition of a fatty acid alkyl ester, e.g. Agnique ME 12 CF, to the microcapsules improved the chemical stability of the products - product nos. 2-4. That is, the degradation of malathion was reduced in the microcapsules containing Agnique ME 12 CF compared with the reference product no. 1. In addition, the presence of an ester of a fatty acid, e.g. Agnique ME 12 CF, reduced the formation of the toxic degradation product isomalathion during the preparation of the microcapsules and upon storage.

### Example 2

**Table 2**

| | | | | | | |
|---|---|---|---|---|---|---|
| Compositions and chemical properties of malathion polyurea microcapsules | | | | | | |

| Product no. | 1 | 2 | 3 | 4 | Com-5 | Com-6 |
|---|---|---|---|---|---|---|
| Composition % w/w | | | | | Malathion EW | Malathion EW |
| Oil phase: | 40 | 40 | 40 | 40 | | |
| **Malathion** | 2.0 | 1.6 | 1.2 | 0.8 | | plus |
| **PAPI** (Shell material) | 2.0 | 1.6 | 1.2 | 0.8 | | 0.8%(w/ w) PAPI |
| **TDI** (Shell material) | 20 | 20 | 20 | 20 | | and 0.8%(w/ |
| **Agnique ME 12CF** (Solvent) | 0.75 | 0.75 | 0.75 | 0.75 | | w) TDI |
| Water phase: | 0.28 | 0.28 | 0.28 | 0.28 | | |
| **Airvol 205** (Hydrocol.) | 0.4 | 0.4 | 0.4 | 0.4 | | |
| **Sodium citrate** (Buffer) | | | | | | |
| **Hydrogen peroxide** (Stabilizer) | Adjust to pH 5.0 | Adjust to pH 5.0 | Adjust to pH 5.0 | Adjust to pH 5.0 | pH 5.0 | pH 5.0 |
| **Sodium hydroxide 1M** (pH modifier) | Up to 100 | Up to 100 | Up to 100 | Up to 100 | | |
| **Water** | | | | | | |
| % of initial malathion cont. degraded after 14 days at 54°C | 2.3 | 3.0 | 0.74 | 0.99 | 4.8 | 10.5 |
| Isomalathion (ppm) in fresh formulation | 367 | 343 | 315 | 294 | 340 | 497 |
| Isomalathion (ppm) after 14 days at 54°C | 2000 | 1,000 | 855 | 598 | 2321 | 14700 |

The products nos. 1-4 listed in table 2 were produced following the manufacturing procedure outlined in Example 1. Product 5 and 6 in table 2 are comparative reference products. Product 5 is a commercial malathion 440 g/l oil-in-water formulation (EW formulation) without any solvent based on esters of fatty acids and product 6 is the same malathion 440 g/l EW product in which PAPI and TDI were mixed with the malathion during the formulation process to prepare microcapsules. Product 6 was prepared according to the manufacturing procedure outlined in example 1. Like the other products nos. 1-4, products 5 and 6 were heated to 68°C for 6 hours.

As shown in table 2 degradation of malathion and formation of isomalathion was also present in a comparative commercial malathion 440 g/l EW formulation. Microencapsulation of the malathion 440 g/l EW product by PAPI and TDI, comparative product 6 in table 2, increased the content of isomalathion after storage. The presence of PAPI and TDI also increased the degradation of the active ingredient in the formulation. That is, the microencapsulation of malathion worsened the instability problems. Higher malathion degradation and higher isomalathion concentration after storage were observed for the microcapsule product no. 6 compared with the EW product no. 5.

Degradation of malathion and formation of isomalathion is a problem when formulating malathion and the problem is especially pronounced when the malathion is formulated as a microcapsule. However, as seen from products nos. 1-4, the presence of an ester of a fatty acid within the microcapsule, e.g. Agnique ME 12 CF - a methylated fatty acid, meant the malathion stability was significantly improved and the concentration of isomalathion was on a low level after storing of the formulations for 14 days at 54°C.

### Example 3

In table 3 a series of malathion EW (oil-in-water) and CS (capsule suspensions) formulations are presented. Throughout the study a commercial malathion 440 g/l EW formulation without any solvent based on esters of fatty acids was applied as a template regarding the composition of the microcapsule formulations.

For the microcapsule formulations comprising PAPI and/or TDI as shell forming materials (products nos. 3-6), the manufacturing procedure outlined in example 1 was applied. For the sake of comparison, product no. 2, a commercial malathion EW, in table 2 was kept at 68°C for 8 h. The microcapsule formulations were heated to 68°C for 6 hours in order to speed up the interfacial polymerisation reaction.

**Table 3**

| Product | % initial malathion degraded after 14 days at 54°C | Isomalathion (ppm) in fresh formulation | Isomalathion (ppm) in formulation stored for 14 days at 54°C |
|---|---|---|---|
| 1. Malathion 440 g/l EW Commercial | 3.5 | 250 | 550 |
| 2. Malathion 440 g/l EW 68°C for 8 h | 4.8 | 340 | 2321 |
| 3. Malathion 440 g/l EW plus 0.9% w/w TDI 68°C for 8 h | 4.6 | - | 14600 |
| 4. Malathion 440 g/l EW plus 0.9% w/w PAPI 68°C for 8 h | 7.4 | - | 14900 |
| 5. Malathion 440 g/l EW plus 0.9% TDI and 0.9% w/w PAPI 68°C for 8 h | 10.5 | - | 14700 |
| 6. Malathion 440 g/l EW plus 0.9% TDI, 0.9% w/w PAPI and 10% w/w Agnique ME 890 G 68°C for 8 h | 1.5 | 426 | 1010 |

The chemical stability results shown in table 3 show the benefit of adding one or more ester of fatty acids, e.g. Agnique ME 890 G - a methylated fatty acid, to a malathion microcapsule formulation. By incorporating Agnique ME 890 G a significant improvement of the malathion stability was achieved in comparison with products nos. 1-5. Only 1.5% w/w of the initial malathion content was degraded after 14 days at 54°C, whereas in an analogue malathion microcapsule formulation not containing an ester of a fatty acid, 10.5% w/w of the initial malathion content was degraded after 14 days at 54°C.

As seen from the results in table 3, the presence of di- or polyisocyanates, played a key role in making the malathion unstable and caused degradation and also triggered a massive formation of undesired isomalathion. This formation of isomalathion was significantly reduced by incorporating an ester of a fatty acid, e.g. Agnique ME 890 G, within the microcapsule.

### Example 4

Malathion polyurea microcapsules formulations were tested for their phytotoxicity on apples (golden delicious). The formulations were diluted to a malathion content of either 0.23% or 0.4% in tap water and four 10µl droplets of each solution were placed on 4 apples. 2 apples were stored at 20°C and the other 2 were stored at 40°C. After 5 days storage the apples were checked for the severity of phytotoxicity. The severity of phytotoxicity on the apples was graded on a scale from 0-5 (5 most severe).

For comparative reasons the phytotoxicity was tested on a commercial malathion 400 g/L emulsifiable concentrate (EC) formulation together with two malathion microcapsules having a composition as provided for product no. 3 in table 1, one with an average capsule size of 3.7µm (product a-CS) and the other an average capsule size of 6.0µm (product b-CS). Yet another composition was prepared according to the composition provided for in table 2 - product no.1 with an average capsule size of 3.5µm (product c-CS). According to the phytotoxicity results on golden delicious shown in table 4 there was no phytotoxicity observed on the apples with malathion microcapsules comprising an ester of a fatty acid, e.g. Agnique ME 12 CF, but on the comparative commercial malathion EC formulation phytotoxicity on apples was observed, especially at elevated temperatures.

**Table 4**

| Phytotoxicity observed 5 days after application on apples | | | | | |
|---|---|---|---|---|---|
| Storage temp. (malathion conc.) | Product | | | | |
| | Control | EC | α-CS | b-CS | c-CS |
| 20°C (0.23%) | 0 | 0 | 0 | 0 | 0 |
| 40°C (0.23%) | 0 | 1.58 | 0 | 0 | 0 |
| 20°C (0.4%) | 0 | 0.33 | 0 | 0 | 0 |
| 40°C (0.4%) | 0 | 3.38 | 0 | 0 | 0 |

### Example 5

Stability data are given in table 5 for two comparative polyurea malathion microcapsule formulations that do not comprise an ester of a fatty acid and a polyurea malathion microcapsule formulation prepared according to the procedure outlined in example 1. The composition of this formulation is shown in table 5.

**Table 5**

| Product | % of initial malathion degraded after 2 years at 17.5°C | % of initial malathion degraded after 14 days at 54°C | Isomalathion (ppm) in fresh formulation | Isomalathion (ppm) after 14 days at 54°C |
|---|---|---|---|---|
| Comparative commercial malathion 30% CS | (12.3)²⁾ | 24 | 4032 | 15500 |
| Comparative malathion CS with xylene as solvent, (b.p > 100°C) as inferred from ¹⁾ | 15 | (29)²⁾ | - | - |
| Malathion CS composition (% w/w) | | | | |
| Oil phase: | | | | |
| Malathion (40) PAPI (3.5) Agnique ME 12 CF (15) | (0.4)²⁾ | 0.7 | 263 | 511 |
| Water phase: | | | | |
| Ethylene diamine (0.62) LFH (1.25) Hydrogen peroxide (0.8) Thickener (0.45) HCl to pH 5.0 Water up to 100 | | | | |

| | | | | |
|---|---|---|---|---|
| 1) D. Dragan & D. Mancas, Revista di Chimie, 38(9), 826-829 (1987) 2) Based on Arrhenius' calculation and an activation energy (Ea) of 100,000 J/mole for the malathion degradation reaction. The Ea has been determined experimentally for malathion in water based formulations. | | | | |

Regarding preparation, the mixing of the oil phase and the water phase and the emulsification of the oil phase in the water phase was done as described in example 1 with the exception that polymerization reaction was carried out at room temperature without application of an external heat source.

According to table 5, the malathion microcapsule formulation composed as described therein had superior stability properties when compared with the two comparative microcapsule formulations. Both the malathion stability as such as well as the inhibition of isomalathion formation upon storage improved with the use of an ester of a fatty acid compared to the two formulations without such solvent.

### Example 6

Malathion formulations were tested in a pollen tube growth test, which is used to give an indication on how eye irritant the malathion formulations are. In such test, low values would indicate that the formulation is very eye irritant. Pollen tube growth results are given in table 6 for two malathion microcapsules having a composition similar to product no. 2 and product no. 3 in table 1 and as a comparative example data for a commercial malathion 400 g/l EC formulation is provided.

The pollen tube growth test was made according to "The Pollen Tube Growth Test" by Udo Kristen and Rolf Kappler; Edited by S. O'Hara and C. K. Atterwill, Methods in Molecular Biology, Vol. 43: In Vitro Toxicity Testing Protocols, 1995.

**Table 6**

| | | |
|---|---|---|
| IC-50 values for two malathion microcapsule formulations and for a commercial malathion EC formulation found in the pollen tube growth test. | | |

| Product | IC50 | 95% confidence interval |
|---|---|---|
| | ppm | ppm |
| Product 2 in exp. 1 | 588 | 519-667 |
| Product 3 in exp. 1 | 753 | 665-853 |
| 400 g/L EC | 28 | 27-29 |

An IC-50 value is the concentration of a test compound, i.e. malathion, that reduces pollen tube growth to 50% of control. The IC-50 values given in table 6 indicates a lower eye irritancy of the malathion microcapsules comprising an ester of a fatty acid, e.g. Agnique ME 12CF compared to the commercial malathion EC formulation.

### Example 7

Malathion polyurea/polyamide microcapsule formulations were prepared. The compositions of the microcapsules are outlined in table 7.

**Table 7**

| Product no. | 1 (comparative) | 2 |
|---|---|---|
| Composition % w/w | | |
| Oil phase: | | |
| **Malathion** | 40 | 40 |
| **PAPI** (Shell material) | 0.6 | 0.6 |
| **Sebacoyl chloride** (Shell material) | 0.3 | 0.3 |
| **Trimesoylchloride** (Shell material) | 0.26 | 0.26 |
| **Agnique ME 12CF** (Solvent) | 0 | 10 |
| Water phase: | | |
| **Airvol 205** (Hydrocol.) | 0.75 | 0.75 |
| **70%** | 0.93 | 0.93 |
| **Hexamethyldiamine** (Shell material) | 0.53 | 0.53 |
| | | |
| **50% Sodium hydroxide** (pH modifier) | 0.1 | 0.1 |
| **Xanthan Gum** (Thickener) | Up to 100 | Up to 100 |
| **Water** | | |

The oil phase comprising malathion, PAPI, sebacoylchloride, trimesoylchloride and Agnique ME 12 CF, was mixed applying a low shear mixer. Similarly a water phase was prepared by mixing the ingredients Airvol 205 (a protective colloid, available from Celanese, also available under the trade name Celvol 205) and water. Afterwards, the oil phase was added to the water phase applying high shear mixing during addition and mixed for an additional 10 min. period. Electric conductivity measurement was used to assure the emulsion was of the oil-in-water (o/w) type. Average droplet size after emulsification was in the range of 4-6 µm. The high shear stirrer was replaced by an anchor stirrer and a mixture of hexamethyldiamine, sodium hydroxide and water was added and the temperature was raised to 50°C and maintained for a 2 hour period. After cooling to room temperature xanthan gum and water was added and the mixture stirred until the formulation was homogeneous.

Presence of an ester of a fatty acid, e.g. Agnique ME 12 CF, within the microcapsule improved the chemical stability as a 25% reduction of malathion degradation was observed. In addition the isomalathion formation in the formulation when stored at 54°C at 14 days was reduced by 33% on a comparative scale.

### Example 8

Malathion polyurethane microcapsulecompositions of the microcapsules were prepared as outlined in table 8 including chemical stability properties.

**Table 8**

| Product no. | 1 (comparative) | 2 |
|---|---|---|
| Composition % w/w | | |
| Oil phase: | | |
| **Malathion** | 40 | 40 |
| **PAPI** (Shell material) | 1.8 | 1.8 |
| **Agnique ME 12CF** (Solvent) | 0 | 10 |
| Water phase: | | |
| **Airvol 205** (Hydrocol.) | 0.75 | 0.75 |
| **Hexanediol** (Shell material) | 0.85 | 0.85 |
| **Xanthan Gum** (Thickener) | 0.1 | 0.1 |
| **Water** | Up to 100 | Up to 100 |

The oil phase comprising malathion, PAPI and Agnique ME 12 CF was mixed applying a low shear mixer. A water phase was prepared by mixing Airvol 205 and water. Afterwards, the oil phase was added to the water phase applying high shear mixing during addition and mixed for an additional 10 min. period. Electric conductivity measurement was used to assure the emulsion was of the o/w type. Average droplet size after emulsification was in the range of 4-6 µm. The high shear stirrer was replaced by an anchor stirrer and a mixture of hexanediol and water was added and the temperature raised to 50°C and maintained for an additional 2 hour period. After cooling to room temperature xanthan gum and water was added and stirred until the formulation was homogeneous.

Presence of an ester of a fatty acid, e.g. Agnique ME 12 CF, within the microcapsule improved the chemical stability as a 39% reduction of malathion degradation was observed. In addition the isomalathion formation in the formulation when stored at 54°C at 14 days was reduced by 34% on a comparative scale.

### Example 9

The dermal permeation of malathion from microcapsule and EC formulations was studied. Shaved dorsal rat skin mounted in Franz diffusion cells was applied. Neat formulation was applied on the donor site of the skin and a mixture of water and ethanol, 1:1 based on volume, constituted the receiver phase. Samples were taken from the receiver phase and analyzed for malathion by gas-chromatography.

The results are given in table 9.

**Table 9**

| Formulation | Amount of malathion permeated through skin after 48 h |
|---|---|
| Malathion 40 % w/w EC | 11.3 mg |
| Malathion 40% w/w CS (Table 1, product 3) - containing 15% w/w Agnique ME 12 CF | 0.81 mg |
| Malathion 40% w/w CS (Table 5, ethylene diamine PAPI polyurea) - containing 15% w/w Agnique ME 12 CF | 0.51 mg |

According to table 9, a reduction of the malathion dermal permeation, i.e. a reduction of the worker exposure risk, was achieved by applying the malathion microcapsule formulations, indicating the microcapsules to be more user-friendly than conventional EC formulations.

### Example 10

The malathion soil degradation of the three malathion formulations listed in table 9 was measured in standardized soil consisting of 14.4% clay, 12.6% silt, 63.0% sand and 10% water. The malathion half-life values (DT-50) for both the EC formulation and the two microcapsule formulations were significantly lower than 60 days, which is often set as a maximum requirement for product approval. A fast degradation of the active ingredient in soil is desirable from an environmental perspective. Although the malathion microcapsule formulations presented in this invention are chemically stable formulations on storage, they are additionally easily degraded in soil.

### Example 11

Malathion polyurea microcapsule formulations were prepared as outlined in table 10.

**Table 10**

| Product no. | 1 | 2 | 3 | 4 |
|---|---|---|---|---|
| Composition (% w/w) | | | | |
| Oil phase: | | | | |
| **Malathion** | 40 | 40 | 30 | 30 |
| **PAPI** (Shell material) | 3.52 | 3.52 | 2.64 | 2.64 |
| **Agnique ME 12CF** (Solvent) | 15 | 15 | 11.25 | 11.25 |
| Water phase: | 0.62 | 0.62 | 0.47 | 0.47 |
| **Ethylene** | | | | |
| **diamine** (Shell material) | 0.75 | 0.75 | 0.57 | 0.57 |
| **Airvol1205** (hydrocolloid) | 0.28 | 1.12 | 1.12 | 1.12 |
| **Sodium citrate** (Buffer) | 1.25 | 1.25 | 1.25 | 2.0 |
| **LFH** (Emulsifier) | 0.8 | 0.8 | 0.6 | 0.6 |
| **Hydrogen peroxide** (Stabilizer) | 0.2 | 0.2 | 0.2 | 0.2 |
| **Thickener** | Adjust to pH 5.0 | Adjust to pH 5.0 | Adjust to pH 5.0 | Adjust to pH 5.0 |
| **HCL 10 mol/L** (pH modifier) | Up to 100 | Up to 100 | Up to 100 | Up to 100 |
| **Water** | | | | |
| % of initial malathion content degraded after 14 days at 54°C | 0.7 | 1.7 | 1.7 | 0.0 |
| Isomalathion (ppm) in fresh formulation | 263 | 541 | 227 | 226 |
| Isomalathion (ppm) after 14 days at 54°C | 511 | 737 | 1601 | 1538 |

The oil phase comprising malathion, PAPI and Agnique ME 12 CF, was mixed applying a low shear mixer. Similarly a water phase comprising Airvol 205, sodium citrate and water was prepared. Afterwards, the oil phase was added to the water phase applying high shear mixing both during the addition and afterwards for 10 min. Electric conductivity measurement was used to assure the emulsion was of the o/w type. Average droplet size after emulsification was in the range 4-6 µm. The high shear stirrer was replaced by an anchor stirrer and ethylene diamine and LFH was added and the emulsion kept under stirring for 90 min. Afterwards hydrogen peroxide and thickener was added and the emulsion stirred for 60 minutes. The formulation was finalized by a pH adjustment to pH 5.0 with HCl 10 mol/L.

According to the stability data in table 10, addition of an ester of a fatty acid, e.g. Agnique ME 12 CF, to the microcapsules improved the chemical stability of the malathion. Comparative formulations and stability data are presented in table 5.

### Example 12

Malathion polyurea microcapsule formulations were prepared. The compositions of the microcapsules prepared are outlined in table 11.

**Table 11**

| Product no. | 1 | 2 | 3 |
|---|---|---|---|
| Composition (% w/w) | | | 75% w/w of product 1, table 11 and table 11 and 25% w/w of product 2. table 11 |
| Oil phase: | | | |
| **Malathion** | 40 | 40 | |
| **PAPI** (Shell material) | 3.2 | 0.8 | |
| **Agnique ME 12CF** (Solvent) | 20 | 20 | |
| Water phase: | 0.75 | 0.75 | |
| **Airvol 205** (Hydrocolloid) | 0.28 | 0.28 | |
| **Sodium citrate** (Buffer) | 0.6 | 0.6 | |
| **Hydrogen peroxide** (Stabilizer) | 1.0 | 1.0 | |
| **Atlox 4913** (Dispersent) | 0.05 | 0.05 | |
| **Thickener** | Adjust to pH 5.0 | Adjust to pH 5.0 | |
| **Sodium hydroxide 1M** (pH modifier) | Up to 100 | Up to 100 | |
| **Water** | | | |
| % of initial malathion content degraded after 14 days at 54°C | 2.0 | 0.9 | 2.4 |
| Isomalathion (ppm) in fresh formulation | 146 | 264 | 382 |
| Isomalathion (ppm) after 14 days at 54°C | 631 | 323 | 648 |

The oil phase comprising malathion, PAPI and Agnique ME 12 CF was mixed applying a low shear mixer. Similarly the water phase was prepared by mixing Airvol 205, sodium citrate, hydrogenperoxide and water. Afterwards, the oil phase was added to the water phase applying high shear mixing during addition and continued for an additional 10 minute period. Electric conductivity measurement was used to the check that the emulsion was of the o/w type. Average droplet size after emulsification was in the range of 4-6 µm. The high shear stirrer was replaced by an anchor stirrer and the temperature raised to 68°C to speed up the interfacial polymerization reaction. After 6 hours the temperature was lowered to room temperature and Atlox 4913 (available from Croda) and thickener was added. Finally the pH of the homogeneous formulation was measured and adjusted to pH 5.0 with sodium hydroxide 1 M.

According to the stability data in table 11, application of a fatty acid ester solvent, e.g. Agnique ME 12 CF, within the microcapsules improved the chemical stability of the products as the degradation of malathion was reduced in the products containing Agnique ME 12 CF compared with the capsules without such solvents e.g. the reference product of table 1. In addition the formation of the undesired isomalathion is significantly reduced

### Example 13

The efficacy of malathion microcapsules and EC formulation was studied on dysdercus. Each formulation was tested at two dose rates and 8 replicates. The test solution was sprayed on cotton plants in a spray cabinet at a rate of 100 1/ha. After drying the cotton leaves they were cut and placed in a Petri dish with moist filter paper. Each Petri dish were infested with 10 dysdercus *(Dysdercus singulatus)* in the fifth nymph stage. The dishes were placed in a climate cabinet at 27°C and 70% relative humidity. Number of dead insects were recorded after 72 hours. The commercial malathion 30% w/w CS was tested applying 3 replicates.

**Table 12**

| | | |
|---|---|---|
| Average number of dead dysdercus on cotton on malathion formulations tested at two dose rates (ai/ha) | | |

| Product | 25g ai/ha | 75g ai/ha |
|---|---|---|
| Malathion 400 g/L EC | 0.88 | 7.25 |
| Malathion 40% w/w CS (table 11, product 3) | 2.13 | 8.38 |
| Malathion 40% w/w CS (table 10, product 1) | 5.13 | 8.88 |
| Comparative commercial malathion 30% w/w CS | 0 | 3 |

According to the efficacy results given in table 12, the malathion microcapsules containing Agnique ME 12 CF have an efficacy as good or slightly better than the Malathion EC formulation, whereas the commercial malathion microcapsule had no efficacy at all at 25g ai/ha and a low efficacy at the higher dose rate of 75g/ai/ha.

### Example 14

The efficacy of the malathion microcapsule formulation according to table 11, product 3 and a comparative malathion EC formulation was studied on dysdercus. In a spray cabinet two sets of cotton plants were sprayed at a rate of 100 1/ha, one set for LT-50, day 0 determination and the other set for LT-50 determination day 7 after application. A LT-50 value is a statistically derived average time interval during which 50% of a given population may be expected to die. After having fried the plants the cotton leaves were cut and placed in a Petri dish with moist filter paper. The first set of cotton leaves were infested with 10 dysdercus in the fifth nymph stage. The number of dead insects was recorded over time until all insects were dead. The tested dose was set at a rate of 200g malathion per hectare. The other set of cotton plants for LT-50, day 7 determination were placed in a greenhouse until needed and they were infested and results recorded via the same procedure as for the LT-50, day 0 experiment.

**Table 13**

| | | | | |
|---|---|---|---|---|
| LT-50 values on malathion formulations tested on *Dysdercus singulatus* at 200g ai/ha. | | | | |

| Product | Day 0 | | Day 7 | |
|---|---|---|---|---|
| | LT-50 | 95% conf. interval | LT-50 | 95% conf. interval |
| | Minutes | Minutes | Minutes | Minutes |
| Malathion 400 g/L EC | 196.3 | 74.5-517.4 | No effect | |
| Malathion 40% w/w CS (table 11, product 3) | 178.5 | 145.2-219.5 | 262.1 | 215.3-319.2 |

According to the LT-50 values in table 13 the malathion formulation both have about the same knockdown efficacy at day 0. The efficacy after day 7 show that there is no effect of the malathion EC formulation, whereas the microcapsule formulation still provides an insecticidal effect.

### Example 15

Malathion polyurea microcapsule formulations were prepared with the same composition as product no. 1 in table 10. pH variation of the aqueous microcapsule suspension was made according to table 14 using hydrochloric acid or sodium hydroxide as adjusters.

**Table 14**

| Product no. | 1 | 2 | 3 | 4 | 5 |
|---|---|---|---|---|---|
| pH of capsule suspension | 5.1 | 6.2 | 7.0 | 8.3 | 9.2 |
| % of initial malathion content degraded after 14 days at 54°C | 3.2 | 3.8 | 5.7 | 6.0 | 4.5 |
| Isomalathion (ppm) in fresh formulation | 218 | 225 | 280 | 207 | 187 |
| Isomalathion (ppm) after 14 days at 54°C | 563 | 678 | 742 | 1339 | 4464 |

According to the stability data in table 14 the pH of the malathion microcapsule suspension had an impact on the stability.

### Example 16

Malathion polyurea microcapsule formulations were prepared with the same composition as product no. 3 in table 11. pH variation of the aqueous microcapsule suspension was made according to table 14 using hydrochloric acid or sodium hydroxide as adjusters.

**Table 15**

| Product no. | 1 | 2 | 3 | 4 | 5 |
|---|---|---|---|---|---|
| pH of capsule suspension | 5.1 | 6.0 | 7.1 | 8.0 | 9.3 |
| % of initial malathion content degraded after 14 days at 54°C | 1.7 | 1.0 | 1.2 | 1.5 | 1.5 |
| Isomalathion (ppm) in fresh formulation | 292 | 257 | 249 | 256 | 223 |
| Isomalathion (ppm) after 14 days at 54°C | 569 | 612 | 632 | 607 | 672 |

In contrast to example 15 the stability data of malathion microcapsules produced according to table 15 show that within a wide pH range, the compositions provided stable microcapsule suspensions.

### Example 17

Malathion polyurea microcapsule formulations were prepared. The compositions of the microcapsules prepared are outlined in table 16.

**Table 16**

| Product no. | 1 | 2 | 3 |
|---|---|---|---|
| Composition (% w/w) | | | 75% w/w of product 1, and 25% w/w of product 2 |
| Oil phase: | | | |
| **Malathion** | 30 | 30 | |
| **PAPI** (Shell material) | 2.6 | 1.1 | |
| **Agnique ME** **12CF** (Solvent) | 11.3 | 11.3 | |
| Water phase: | 0.5 | 0.2 | |
| **Ethylene diamine** (Shell material) | 0.75 | 0.75 | |
| **Airvol 205** (Hydrocolloid) | 1.12 | 1.12 | |
| **Sodium citrate** (Buffer) | 0.8 | 0.8 | |
| **Hydrogen peroxide** | 1.0 | 1.0 | |
| (Stabilizer) | 1.0 | 1.0 | |
| **Atlox 4913** (Dispersent) | 0.4 | 0.4 | |
| **LFH** (Emulsifier) **Thickener** | Adjust to pH 5.0 | Adjust to pH 5.0 | |
| **Sodium hydroxide 1M** (pH modifier) | Up to 100 | Up to 100 | |
| **Water** | | | |
| % of initial malathion content degraded after 14 days at 54°C | 0.9 | - | 0.0 |
| % of initial malathion content degraded after 8 weeks at 40°C | 0.9 | - | 0.0 |
| Isomalathion (ppm) in fresh formulation | 233 | - | 212 |
| Isomalathion (ppm) after 14 days at 54°C | 472 | - | 388 |
| Isomalathion (ppm) after 8 weeks at 40°C | 399 | - | 314 |

The oil phase comprising malathion, PAPI and Agnique ME 12 CF was mixed applying a low shear mixer. Similarly the water phase was prepared by mixing Airvol 205, sodium citrate, hydrogenperoxide and water. Afterwards, the oil phase was added to the water phase applying high shear mixing during addition and continued for an additional 10 minute period. Electric conductivity measurement was used to the check that the emulsion was of the o/w type. Average droplet size after emulsification was in the range of 4-6 µm. The high shear stirrer was replaced by an anchor stirrer and the ethylenediamine was added. The temperature was raised to 68°C to speed up the interfacial polymerization reaction. After 6 hours the temperature was lowered to room temperature and Atlox 4913 and LFH was added. The thickener was added after the mixture was homogenous. Finally the pH of the homogeneous formulation was measured and adjusted to pH 5.0 with sodium hydroxide 1 M.

According to the stability data in table 16, application of a fatty acid ester solvent, e.g. Agnique ME 12 CF, within the microcapsules improved the chemical stability of the products as the degradation of malathion was reduced compared with capsules without such solvents e.g. the reference product of table 1. In addition the formation of the undesired isomalathion is significantly reduced.

### Example 18

Following the procedure provided for in United States patent no. US 4,889,719, example 7, a microcapsule suspension was prepared using same ingredients in the same amounts i.e. comprising 20% of malathion. For comparison, a similar suspension was prepared with addition of a fatty acid ester, Agnique ME 12 CF, to the oil phase comprising the malathion in an amount as to provide a fatty acid ester content of 7.5%. Addition of a fatty acid ester reduced the isomalathion content by 50% after storage for 14 days at 54°C whereas the degradation of the malathion was reduced by 25%, both on a comparative scale. In addition the presence of the fatty acid ester in the malathion solution improved the overall stability of the final microcapsule formulation.

### Example 19

The malathion CS formulation according to table 16, no. 1, was tested in the field for phytotoxicity on table grape variety "Italia". It is known that Malathion EW and EC formulations can provoke severe phytotoxicity on grape bunches of this table grape variety. Phytotoxicity field trials on table grape variety "Italia" were conducted in Argentina. In these trials the malathion CS formulation exhibited only slight phytotoxicity on grape bunches of "Italia". As comparison, the malathion reference formulation (EW formulation) in the same trial exhibited high degree of phytotoxicity on the grape bunches. The phytotoxicity results from the field trials are provided in table 17 below.

The results clearly indicate that the malathion CS formulation is significantly more selective on table grape varieties susceptible to malathion EW and EC formulations

**Table 17 Intensity of phytotoxicity 50 days after application on table grape variety "Italia" - one application and this carried out when the time 98% of flower hoods had fallen.**

| Treatment | Doses (g malathion/ha) | Mean intensity of phytotoxicity on grapes (%) |
|---|---|---|
| Malathion 440 g/l EW | 308 | 76.8 |
| Malathion 440 g/l EW | 154 | 70.5 |
| Malathion 320 g/l CS | 308 | 6.0 |
| Malathion 320 g/l CS | 154 | 3.0 |
| No treatment | - | 0.0 |

## Claims

1. A formulation comprising an aqueous suspension of a malathion solution encapsulated within a polymeric shell material wherein the malathion solution comprises malathion and one or more organic solvents selected among esters of fatty acids.

2. A formulation according to claim 1, wherein the capsule shell material is composed of polyurea, polyurethane, polyamide, polyester or mixtures thereof.

3. A formulation according to claim 1, wherein the pH value of the aqueous suspension is lower than 12.

4. A formulation according to claim 1, wherein the pH value of the aqueous suspension is between 2 and 7.

5. A formulation according to any of claims 1 to 4, wherein the organic solvent is selected among (C₁-C₂₀)-alkyl (C₅-C₂₂)-fatty acid esters.

6. A formulation according to claim 5, wherein the organic solvent is selected among alkyl esters of fatty acids, the fatty acids having a carbon chain length of 5-20.

7. A formulation according to claim 6, wherein the organic solvent is selected among alkyl esters of fatty acids, the alkyl part having 1-18 carbon atoms.

8. A formulation according to claim 7, wherein the organic solvent is selected among alkyl esters of fatty acids, the alkyl part having 1-3 carbon atoms.

9. A formulation according to claim 8, wherein the organic solvent is selected among methyl esters of fatty acids.

10. A formulation according to claim 9, wherein the organic solvent is selected among methyl esters of fatty acids, the fatty acids having a carbon chain length of 7-16.

11. A method for the control of insects comprising applying a formulation according to any of claims 1 to 10, to insects, plants, plant seeds, soil or surfaces infested with insects or likely to be occupied by insects.

12. A method for the control of insects on crops, the said crops being susceptible to malathion, comprising applying to the crops a formulation according to claim 1, whereby phytotoxic damage on the crops caused by the malathion is reduced or eliminated when applied in an insecticidal effective amount.

13. A method of stabilizing malathion by encapsulating a malathion solution within a polymeric shell material to provide microcapsules, wherein the malathion solution comprises malathion and one or more organic solvents selected among esters of fatty acids.

14. Microcapsules containing a malathion solution comprising malathion and one or more organic solvents selected among esters of a fatty acids.

15. A process for the preparation of a formulation according to claim 1 comprising
(a) preparing an organic solution comprising malathion, at least one shell-forming material, one or more organic solvents selected among esters of fatty acids and, optionally, additional water immiscible auxiliaries;
(b) creating an emulsion of the organic solution in a continuous aqueous phase solution comprising water and, optionally, additional water miscible auxiliaries, wherein the emulsion comprises discrete droplets of the organic solution dispersed throughout the continuous aqueous phase solution, with an interface formed between the discrete droplets of organic solution and the aqueous solution; and either
i. causing *in situ* polymerization and/or curing of the shell-forming material in the organic solution of the discrete droplets at the interface with the aqueous solution by heating the emulsion for a sufficient period of time and optionally adjusting the pH to a suitable value to allow substantial completion of shell formation, thereby converting the organic solution droplets to capsules consisting of solid, permeable, polymer shells enclosing a malathion solution, or as an alternative to (i)
ii. causing polymerization at the oil-water interface by bringing together a shell forming material added through the aqueous continuous phase and capable of reacting with the shell forming material(s) in the organic solution, and
(c) optionally adjusting the pH value of the formed aqueous suspension.

## Patentansprüche

1. Formulierung, umfassend eine wässrige Suspension einer Malathionlösung, die in einer Hülle aus polymerem Material eingekapselt ist, wobei die Malathionlösung Malathion und ein oder mehrere aus Fettsäureestern ausgewählte(s) organische(s) Lösungsmittel umfasst.

2. Formulierung nach Anspruch 1, wobei das Material für die Kapselhüllen aus Polyharnstoff, Polyurethan, Polyamid, Polyester oder Gemischen davon zusammengesetzt ist.

3. Formulierung nach Anspruch 1, wobei der pH-Wert der wässrigen Suspension niedriger als 12 ist.

4. Formulierung nach Anspruch 1, wobei der pH-Wert der wässrigen Suspension zwischen 2 und 7 liegt.

5. Formulierung nach einem der Ansprüche 1 bis 4, wobei das organische Lösungsmittel ausgewählt ist aus (C₁-C₂₀)-Alkyl(C₅-C₂₂)-Fettsäureestern.

6. Formulierung nach Anspruch 5, wobei das organische Lösungsmittel ausgewählt ist aus Fettsäurealkylestern, wobei die Fettsäuren eine Kohlenstoffkettenlänge von 5-20 aufweisen.

7. Formulierung nach Anspruch 6, wobei das organische Lösungsmittel ausgewählt ist aus Fettsäurealkylestern, wobei der Alkylteil 1-18 Kohlenstoffatome aufweist.

8. Formulierung nach Anspruch 7, wobei das organische Lösungsmittel ausgewählt ist aus Fettsäurealkylestern, wobei der Alkylteil 1-3 Kohlenstoffatome aufweist.

9. Formulierung nach Anspruch 8, wobei das organische Lösungsmittel ausgewählt ist aus Fettsäuremethylestern.

10. Formulierung nach Anspruch 9, wobei das organische Lösungsmittel ausgewählt ist aus Fettsäuremethylestern, wobei die Fettsäuren eine Kohlenstoffkettenlänge von 7-16 aufweisen.

11. Verfahren zum Bekämpfen von Insekten, umfassend das Aufbringen einer Formulierung nach einem der Ansprüche 1 bis 10 auf Insekten, Pflanzen, Pflanzensamen, mit Insekten verseuchtes oder voraussichtlich von Insekten befallenes Erdreich oder ebensolche Oberflächen.

12. Verfahren zum Bekämpfen von Insekten auf Saatgut, wobei das Saatgut für Malathion anfällig ist, umfassend das Aufbringen einer Formulierung nach Anspruch 1 auf das Saatgut, wodurch eine durch das Malathion verursachte phytotoxische Schädigung des Saatguts beim Aufbringen einer insektizid wirksamen Menge herabgesetzt oder eliminiert wird.

13. Verfahren zum Stabilisieren von Malathion durch Einkapseln einer Malathionlösung in einer Hülle aus polymerem Material zum Bereitstellen von Mikrokapseln, wobei die Malathionlösung Malathion und ein oder mehrere aus Fettsäureestern ausgewählte(s) organische(s) Lösungsmittel umfasst.

14. Mikrokapseln, enthaltend eine Malathionlösung, die Malathion und ein oder mehrere aus Fettsäureestern ausgewählte(s) organische(s) Lösungsmittel umfasst.

15. Verfahren zur Herstellung einer Formulierung nach Anspruch 1, umfassend
(a) Herstellen einer organischen Lösung, umfassend Malathion, mindestens ein hüllenbildendes Material, ein oder mehrere aus Fettsäureestern ausgewählte(s) organische(s) Lösungsmittel und wahlweise zusätzliche mit Wasser nicht mischbare Hilfsstoffe;
(b) Bilden einer Emulsion aus der organischen Lösung in einer Wasser und wahlweise zusätzliche mit Wasser nicht mischbare Hilfsstoffe umfassenden Lösung mit kontinuierlicher wässriger Phase, wobei die Emulsion einzelne Tröpfchen aus der organischen Lösung umfasst, die in der gesamten Lösung mit kontinuierlicher wässriger Phase verteilt sind, wobei eine Grenzfläche zwischen den einzelnen Tröpfchen aus organischer Lösung und der wässrigen Lösung gebildet wird; und entweder
i. Bewirken *in situ* einer Polymerisation und/oder Aushärten des hüllenbildenden Materials in der organischen Lösung aus den einzelnen Tröpfchen an der Grenzfläche mit der wässrigen Lösung, indem die Emulsion eine ausreichende Zeitdauer lang erwärmt und der pH-Wert wahlweise auf einen geeigneten Wert eingestellt wird, um eine weitgehend vollständige Hüllenbildung zu ermöglichen, wodurch die Tröpfchen aus organischer Lösung zu Kapseln umgewandelt werden, die aus eine Malathionlösung einkapselnden festen, durchlässigen Polymerhüllen bestehen, oder alternativ zu (i)
ii. Bewirken einer Polymerisation an der Öl-Wasser-Grenzfläche, indem ein hüllenbildendes Material, das durch die wässrige kontinuierliche Phase zugesetzt wurde und reagieren kann mit dem (den) hüllenbildenden Material(ien) in der organischen Lösung zusammengebracht wird, und
(c) wahlweise Einstellen des pH-Werts der gebildeten wässrigen Suspension.

## Revendications

1. Formulation comprenant une suspension aqueuse d'une solution de malathion encapsulée dans un matériau de coque polymère dans lequel la solution de malathion comprend du malathion et un ou plusieurs solvants organiques choisis parmi les esters d'acides gras.

2. Formulation selon la revendication 1, dans laquelle le matériau de coque de capsule est composé de poly(urée), de poly(uréthane), de poly(amide), de poly(ester) ou leurs mélanges.

3. Formulation selon la revendication 1, dans laquelle la valeur de pH de la suspension aqueuse est inférieure à 12.

4. Formulation selon la revendication 1, dans laquelle la valeur de pH de la suspension aqueuse est comprise entre 2 et 7.

5. Formulation selon l'une quelconque des revendications 1 à 4, dans laquelle le solvant organique est choisi parmi les esters alkyle (en C₁ à C₂₀) d'acides gras (en C₅ à C₂₂).

6. Formulation selon la revendication 5, dans laquelle le solvant organique est choisi parmi les esters d'alkyle d'acides gras, les acides gras ayant une longueur de chaîne carbonée de 5 à 20.

7. Formulation selon la revendication 6, dans laquelle le solvant organique est choisi parmi les esters d'alkyle d'acides gras, la partie alkyle comportant 1 à 18 atomes de carbone.

8. Formulation selon la revendication 7, dans laquelle le solvant organique est choisi parmi les esters d'alkyle d'acides gras, la partie alkyle comportant 1 à 3 atomes de carbone.

9. Formulation selon la revendication 8, dans laquelle le solvant organique est choisi parmi les esters de méthyle d'acides gras.

10. Formulation selon la revendication 9, dans laquelle le solvant organique est choisi parmi les esters de méthyle d'acides gras, les acides gras ayant une longueur de chaîne carbonée de 7 à 16.

11. Procédé de lutte contre des insectes comprenant l'application d'une formulation selon l'une quelconque des revendications 1 à 10, à des insectes, des plantes, des graines de plante, le sol ou des surfaces infestés par des insectes ou susceptibles d'être infestés par des insectes.

12. Procédé de lutte contre des insectes sur des cultures, lesdites cultures étant sensibles au malathion, comprenant l'application aux cultures d'une formulation selon la revendication 1, moyennant quoi l'endommagement phytotoxique sur les cultures provoqué par le malathion est réduit ou éliminé lors de l'application d'une quantité efficace sur le plan insecticide.

13. Procédé de stabilisation du malathion par encapsulation d'une solution de malathion dans un matériau de coque polymère pour former des microcapsules, où la solution de malathion comprend du malathion et un ou plusieurs solvants organiques choisis parmi les esters d'acides gras.

14. Microcapsules contenant une solution de malathion comprenant du malathion et un ou plusieurs solvants organiques choisis parmi les esters d'acides gras.

15. Procédé de préparation d'une formulation selon la revendication 1, comprenant les étapes consistant à
(a) préparer une solution organique comprenant du malathion, au moins un matériau de formation de coque, un ou plusieurs solvants organiques choisis parmi les esters d'acides gras et, facultativement, des auxiliaires immiscibles à l'eau additionnels ;
(b) créer une émulsion de la solution organique dans une solution de phase aqueuse continue comprenant de l'eau et, facultativement, des auxiliaires miscibles à l'eau additionnels, où l'émulsion comprend des gouttelettes discrètes de la solution organique dispersée sur l'intégralité de la solution de phase aqueuse continue, avec une interface formée entre les gouttelettes discrètes de solution organique et la solution aqueuse ; et soit
i. provoquer une polymérisation et/ou un durcissement *in situ* du matériau de formation de coque dans la solution organique des gouttelettes discrètes à l'interface avec la solution aqueuse par chauffage de l'émulsion pendant une durée suffisante et ajuster facultativement le pH à une valeur appropriée pour permettre un achèvement substantiel de la formation de coque, convertissant ainsi les gouttelettes de solution organique en capsules constituées de coques de polymère solides et perméables renfermant une solution de malathion, soit comme alternative à (i)
ii. provoquer une polymérisation à l'interface huile-eau en réunissant un matériau de formation de coque ajouté à travers la phase continue aqueuse et capable de réagir avec le ou les matériaux de formation de coque dans la solution organique, et
(c) ajuster facultativement la valeur de pH de la suspension aqueuse formée.
